# DEMANDE DE BREVET EUROPEEN

(11) **EP 4 671 570 A1**
(43) Date de publication de la demande: **31.12.2025**
(21) Numéro de dépôt: 25184364.5
(22) Date de dépôt: 23.06.2025
(51) Int. Cl.: F16H 57/04, F16H 1/20, B60K 7/00

(54) **MÉCANISME DE TRANSMISSION À LUBRIFICATION INTERNE**

(30) Priorité: 27.06.2024 FR 2407002
(71) Demandeur: VALEO EMBRAYAGES, 80009 Amiens (FR)
(72) Inventeur: SOLAIMALAI, Maheshkannan, 600130 Chennai, Tamil Nadu (IN); MALCOIFFE, Fabien, 95892 Cergy Pontoise (FR); SANKARAN, Anantha-Padmanaban, 600130 Chennai, Tamil Nadu (IN); RAMESHBABU, Manikandan, 600130 Chennai, Tamil Nadu (IN)
(74) Mandataire: Valeo Powertrain Systems

(57) **Abrégé**

L'invention porte sur un mécanisme de transmission (1) à lubrification interne, comportant un carter (40a, 40b) qui définit un plan de niveau de lubrifiant au repos (14) lorsque le mécanisme de transmission (1) est dans une position opérationnelle de référence, le mécanisme de transmission (1) comportant un premier arbre transmission (10) guidé en rotation autour d'un premier axe de rotation (X1), un deuxième arbre de transmission (20) guidé en rotation autour d'un deuxième axe de rotation (X2) et un troisième arbre de transmission (30) guidé en rotation autour d'un troisième axe de rotation (X3) et solidaire en rotation d'au moins une roue dentée de sortie de couple (31), une partie de la roue dentée de sortie de couple (31) se trouvant sous le plan de niveau de lubrifiant au repos (14), le mécanisme de transmission (1) comportant un dispositif de guidage de lubrifiant (50) logé dans le carter (40a, 40b).

## Description

### DOMAINE TECHNIQUE DE L'INVENTION

L'invention se rapporte à la lubrification interne, par exemple par barbotage, des composants d'un mécanisme de transmission, et notamment d'un mécanisme de transmission comprenant un dispositif de réduction de vitesse.

### ÉTAT DE LA TECHNIQUE ANTÉRIEURE

Pour lubrifier un dispositif de réduction de vitesse, en particulier les roulements, les engrenages..., le mécanisme de transmission peut être doté d'une pompe qui fait circuler un lubrifiant tel que de l'huile dans un circuit de lubrification configuré pour atteindre différentes zones spécifiques à lubrifier. Ces dispositifs de lubrification sont dits « actifs ». Un tel dispositif est par exemple décrit dans le document FR2982003, dans lequel une pompe alimente en huile une boite de vitesses par l'intermédiaire d'une goulotte faisant office de réservoir au sein du carter de la boite de vitesses. La goulotte alimente en huile les arbres tournants de la boite de vitesses par l'intermédiaires d'une pluralité d'orifices. Ce dispositif présente l'inconvénient d'être consommateur d'énergie pour faire fonctionner la pompe et encombrant selon un axe vertical étant donné que l'unique réservoir de la goulotte est disposé au-dessus des arbres de transmission, notamment entre un arbre secondaire et la paroi supérieure du carter.

Il existe aussi des dispositifs de lubrification dits « passifs », c'est-à-dire dépourvus de pompe, dans lesquels il est connu de disposer les composants mobiles du mécanisme de transmission à l'intérieur d'un carter contenant de l'huile, mais sans que les composants mobiles soient totalement immergés dans l'huile. C'est alors la mise en mouvement du mécanisme de transmission qui vient, par barbotage, brasser l'huile et la projeter dans l'ensemble du volume intérieur du carter, pour assurer la lubrification souhaitée de l'ensemble du mécanisme, y compris les parties non immergées.

Ces solutions de lubrification passive ne donnent toutefois pas entière satisfaction et la remontée de lubrifiant du bas vers le haut du carter n'est parfois pas suffisante, en particulier lorsque des éléments du dispositif de réduction de vitesse, par exemple un arbre de transmission portant des roues dentées, font obstacle à la remontée du lubrifiant.

Cette problématique est d'autant plus importante lorsque l'architecture du dispositif de réduction de vitesse est orientée verticalement, c'est-à-dire lorsque le mécanisme de transmission est placé dans une position opérationnelle de référence, l'arbre de transmission supportant le différentiel est implanté en bas du carter. Dans ce cas de figure, deux autres arbres de transmission du dispositif de réduction de vitesse sont situés au-dessus de l'axe de rotation du différentiel. Pour ce genre d'architecture, la remontée de lubrifiant du bas vers le haut du dispositif de réduction de vitesse n'est pas suffisante.

### EXPOSE DE L'INVENTION

L'invention vise à remédier aux inconvénients de l'état de la technique et à proposer un mécanisme de transmission combinant une bonne lubrification des paliers de guidage situés en haut du dispositif de réduction de vitesse et une faible consommation énergétique.

Pour ce faire est proposé, selon un premier aspect de l'invention, un mécanisme de transmission à lubrification interne, comportant un carter, le carter définissant un plan de niveau de lubrifiant au repos lorsque le mécanisme de transmission est dans une position opérationnelle de référence, le mécanisme de transmission comportant en outre, logés dans le carter, un premier arbre transmission guidé en rotation autour d'un premier axe de rotation X1 et solidaire en rotation d'au moins un pignon d'entrée de couple, un deuxième arbre de transmission guidé en rotation autour d'un deuxième axe de rotation X2 et un troisième arbre de transmission guidé en rotation autour d'un troisième axe de rotation X3 et solidaire en rotation d'au moins une roue dentée de sortie de couple, le premier arbre transmission et le troisième arbre transmission se superposant au moins partiellement selon une direction verticale par rapport à la position opérationnelle de référence, une partie de la roue dentée de sortie de couple se trouvant sous le plan de niveau de lubrifiant au repos lorsque le mécanisme de transmission est dans la position opérationnelle de référence, le mécanisme de transmission comportant un dispositif de guidage de lubrifiant logé dans le carter et disposé entre le carter et la roue dentée de sortie de couple,
le dispositif de guidage de lubrifiant comprenant une goulotte supérieure dont la surface interne est orientée en direction de la roue dentée de sortie de couple, la première extrémité de la goulotte supérieure recouvre la roue dentée de sortie de couple et la deuxième extrémité de la goulotte supérieure recouvre le pignon d'entrée de couple.

Ce mécanisme de transmission avec son dispositif de guidage de lubrifiant présente l'avantage de récupérer et de distribuer une quantité importante de lubrifiant présent au sein du dispositif de réduction de vitesse du bas vers le haut du carter. La surface interne de la goulotte supérieure réceptionne les projections de lubrifiant générées par le barbotage de la denture hélicoïdale de la roue dentée de sortie de couple immergée dans l'huile. Le lubrifiant est ensuite canalisé jusqu'à la deuxième extrémité de la goulotte supérieure. On favorise ainsi les remontées de lubrifiant du bas du carter vers le haut et on disperse ainsi le lubrifiant dans différentes zones situées en haut du mécanisme de transmission.

Le dispositif de guidage du lubrifiant permet de contrôler le flux de lubrifiant amené en haut du carter, cela de manière fiable et quel que soit la vitesse de rotation du troisième arbre de transmission.

Selon une variante de l'invention, le premier arbre transmission, le deuxième arbre de transmission et le troisième arbre transmission se superposent au moins partiellement selon une direction verticale par rapport à la position opérationnelle de référence. Dans cette variante, le deuxième arbre de transmission est intercalé entre le premier arbre transmission et le troisième arbre transmission selon la direction verticale mais n'implique pas forcément que les premier, deuxième et troisième axes de rotation soient alignés.

De préférence, le deuxième arbre de transmission est solidaire en rotation d'une roue dentée intermédiaire et d'un pignon intermédiaire décalé axialement l'un par rapport à l'autre selon le deuxième axe de rotation X2, le pignon d'entrée de couple du premier arbre de transmission engrène avec la roue dentée intermédiaire et la roue dentée de sortie de couple du troisième arbre de transmission engrène avec le pignon intermédiaire, la goulotte supérieure du dispositif de guidage de lubrifiant présente un profil qui dévie axialement depuis le plan médian de la roue dentée de sortie de couple jusqu'au plan médian du pignon d'entrée de couple.

Avantageusement, la goulotte supérieure du dispositif de guidage de lubrifiant présente un profil incurvé, par exemple en forme de S, de sorte que la surface interne de la goulotte supérieure recouvre la roue dentée de sortie de couple et le pignon d'entrée de couple.

Selon un aspect de l'invention, la goulotte supérieure est de forme allongée avec deux extrémités, une première extrémité étant agencée pour recevoir du lubrifiant projetée au sein du carter par la roue dentée de sortie de couple et la deuxième extrémité étant agencée pour évacuer le lubrifiant canalisé par la goulotte supérieure.

De préférence, la goulotte supérieure présente un fond et deux rebords latéraux pour former, en entrée du dispositif de guidage de lubrifiant, une canalisation ayant en coupe transversale un profil ouvert, le fond supportant la surface interne agencée pour recevoir le lubrifiant. Les deux rebords latéraux s'étendent en direction de la roue dentée de sortie de couple depuis la surface interne.

Selon un aspect de l'invention, le dispositif de guidage de lubrifiant comprend une goulotte inférieure fixée sur la deuxième extrémité de la goulotte supérieure pour former, en sortie du dispositif de guidage de lubrifiant, une canalisation ayant en coupe transversale un profil fermé. De manière avantageuse, le lubrifiant est canalisé selon une direction souhaitée dans une partie haute du mécanisme de transmission.

De préférence, la goulotte inférieure présente une plaque de réception de lubrifiant arrondie qui recouvre le pignon d'entrée de couple. De cette manière, le lubrifiant continue d'être canalisé jusqu'à la sortie du dispositif de guidage du lubrifiant. En effet, le lubrifiant présente une vitesse importante en sortie de roue dentée de sortie de couple. Le lubrifiant est plaqué sur la surface interne de la goulotte supérieure à l'entrée du dispositif de guidage du lubrifiant. En remontant au sein de la goulotte supérieure, le lubrifiant perd de la vitesse. Le lubrifiant est alors récupéré par la goulotte inférieure à l'aide de la plaque de réception.

Par exemple, la goulotte inférieure peut comprendre la plaque de réception de lubrifiant et deux rebords qui fusionnent avec les deux rebords latéraux de la goulotte supérieure, la plaque de réception comprend une surface de réception qui fait face à la surface interne de la goulotte supérieure. Selon cette architecture, la surface de réception de la goulotte inférieure et la surface interne de la goulotte supérieure se font face et présentent des formes complémentaires.

Avantageusement, le fond de la goulotte supérieure, les deux rebords latéraux et la plaque de réception de lubrifiant de la goulotte inférieure forment un entonnoir qui canalise le lubrifiant en direction de la deuxième extrémité de la goulotte inférieure. Selon cette architecture, la goulotte inférieure et la goulotte supérieure se font face et présentent des formes complémentaires.

Selon un aspect de l'invention, la goulotte supérieure présente une grande longueur de canalisation Ls et la goulotte inférieure présente une petite longueur de canalisation Li, le ratio de recouvrement de la goulotte inférieure par rapport à la goulotte supérieure Li/Ls est compris entre 15 et 50 %. La valeur de la longueur de canalisation de la goulotte inférieur dépend de l'angle d'inclinaison α de la surface interne à l'entrée de la goulotte supérieure par rapport au plan de niveau de lubrifiant au repos lorsque le mécanisme de transmission est dans une position opérationnelle de référence. Plus l'angle d'inclinaison est important, plus le ratio de recouvrement se rapproche de la valeur de 50%.

Selon un aspect de l'invention, la deuxième extrémité de la goulotte inférieure comprend au moins une gouttière de sortie de lubrifiant orientée perpendiculairement par rapport aux rebords latéraux de la goulotte supérieure.

De préférence, la gouttière de sortie de lubrifiant est contiguë à la plaque de réception de lubrifiant de la goulotte inférieure.

Selon une variante de l'invention, la gouttière de sortie de lubrifiant peut comprendre un premier bec verseur orienté en direction d'un premier palier de guidage du premier arbre de transmission.

Selon une variante de l'invention, la gouttière de sortie de lubrifiant peut comprendre un premier bec verseur orienté en direction d'un premier palier de guidage du premier arbre de transmission et un deuxième bec verseur orienté en direction d'un deuxième palier de guidage du premier arbre de transmission.

Le mécanisme de transmission selon l'invention peut présenter l'une ou l'autre des caractéristiques décrites ci-dessous combinées entre elles ou prises indépendamment les unes des autres :
- les deux rebords latéraux recouvrent les flancs de la roue dentée de sortie de couple.
- les deux rebords latéraux bordent la surface interne sur toute la longueur de la goulotte supérieure.
- la goulotte inférieure comprend une plaque de réception de lubrifiant et deux rebords de guidage distincts des deux rebords latéraux de la goulotte supérieure.
- la goulotte inférieure est de forme allongée avec deux extrémités, une première extrémité de réception de lubrifiant étant agencée pour recevoir du lubrifiant canalisé par la goulotte supérieure et une deuxième extrémité d'évacuation de lubrifiant étant agencée pour évacuer le lubrifiant canalisé par la goulotte supérieure.
- la plaque de réception de lubrifiant de la goulotte inférieure comprend un becquet de réception situé sur la première extrémité de réception de lubrifiant.
- le pignon d'entrée de couple se trouve au-dessus du plan de niveau de lubrifiant au repos lorsque le mécanisme de transmission est dans la position opérationnelle de référence.
- la roue dentée intermédiaire se trouve au-dessus du plan de niveau de lubrifiant au repos lorsque le mécanisme de transmission est dans la position opérationnelle de référence.
- un carter de fermeture est rapporté sur le carter principal de sorte à former une enceinte close autour du mécanisme de transmission, le dispositif de guidage du lubrifiant étant maintenu en position partiellement par le carter principal et partiellement par le carter de fermeture.
- le dispositif de guidage de lubrifiant est partiellement issu de matière dans le carter principal ou dans le carter de fermeture.
- la paroi périphérique du carter principal comprend une surface cylindrique coaxiale au troisième axe de rotation X3 qui entoure partiellement la périphérie externe de la roue dentée de sortie de couple.
- le carter contient un lubrifiant, par exemple de l'huile, atteignant un plan de niveau d'huile au repos lorsque le mécanisme de transmission est dans une position opérationnelle de référence.

L'invention porte aussi sur un ensemble de propulsion comportant un moteur électrique et un mécanisme de transmission reprenant tout ou partie des caractéristiques mentionnées précédemment, le premier arbre de transmission constituant un arbre de sortie du moteur électrique ou étant solidaire en rotation d'un arbre moteur du moteur électrique. Le cas échéant, la machine électrique comprend un arbre de rotor qui peut être coaxial et solidaire en rotation avec l'arbre d'entrée du réducteur de vitesse.

D'autres caractéristiques et avantages de l'invention sont mis en évidence par la description ci-après d'exemples non limitatifs de réalisation des différents aspects de l'invention.

### BRÈVE DESCRIPTION DES FIGURES

D'autres caractéristiques et avantages de l'invention ressortiront à la lecture de la description qui suit, en référence aux figures annexées, qui illustrent:
[Fig. 1] : la figure 1 est une vue de face de l'intérieur d'un mécanisme de transmission suivant un premier mode de réalisation de l'invention.
[Fig. 2] : la figure 2 est une vue isométrique du mécanisme de transmission de la figure 1.
[Fig. 3] : la figure 3 est une vue simplifiée du mécanisme de transmission de la figure 1.
[Fig. 4] : la figure 4 est une vue de détail du dispositif de guidage de lubrifiant du mécanisme de transmission de la figure 1.

### DESCRIPTION DÉTAILLÉE D'UN MODE DE RÉALISATION

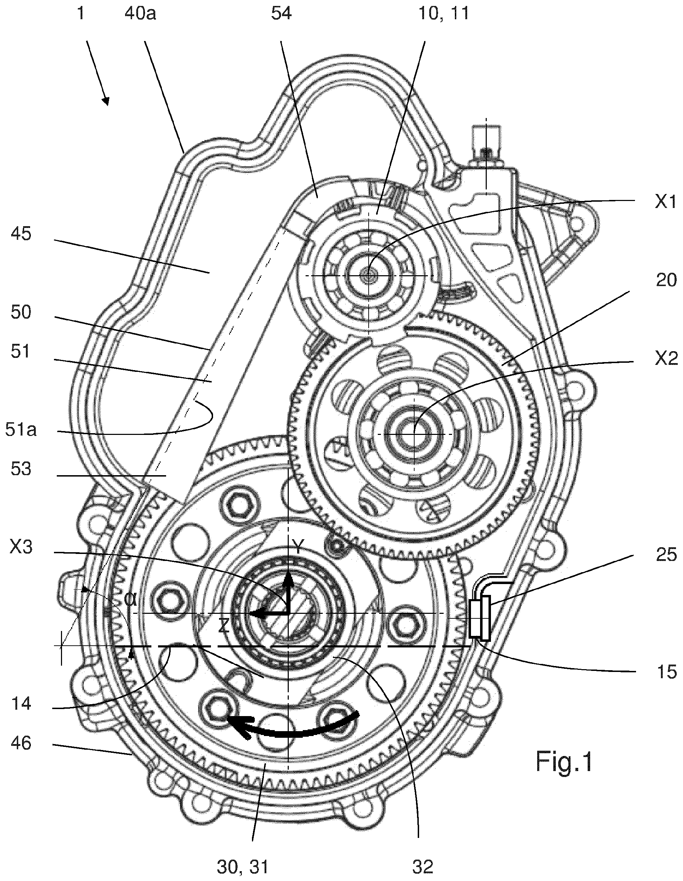

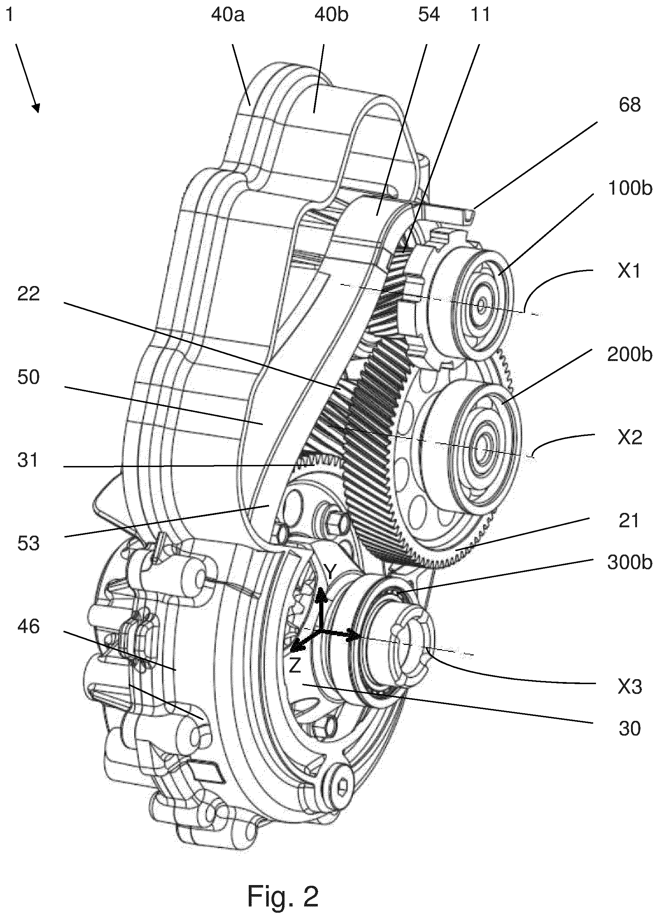

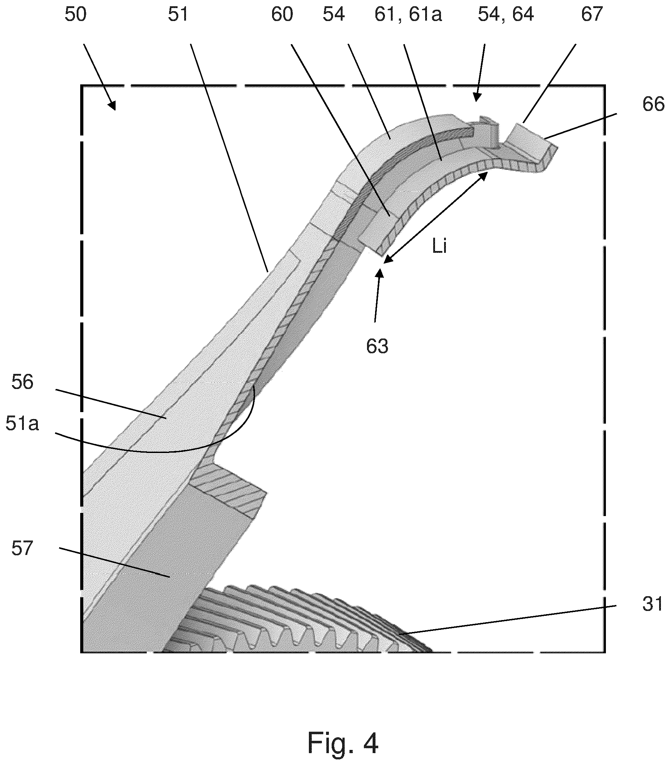

On a représenté sur les figures 1 à 4 un mécanisme de transmission 1 de véhicule automobile selon un premier mode de réalisation de l'invention. Ce mécanisme de transmission 1 est généralement intégré au sein d'un ensemble de propulsion principal d'un véhicule, notamment d'un véhicule automobile électrique, ou bien un ensemble de propulsion secondaire. Par exemple, il peut s'agir d'un ensemble de propulsion électrique secondaire d'un véhicule hybride, en particulier destiné au train arrière du véhicule.

Le mécanisme de transmission **1** comprend, notamment dans un repère orthogonal **XYZ,** un premier arbre de transmission **10** s'étendant le long d'un premier axe de rotation **X1** et portant de façon coaxiale un pignon d'entrée de couple **11.** Dans le repère orthogonal **XYZ,** les plans **XY, YZ** et **XZ** sont perpendiculaires entre eux.

Dans la description et les revendications, on utilisera, les termes « externe » et « interne » ainsi que les orientations « axiale » et « radiale » pour désigner, selon les définitions données dans la description, des éléments du système de transmission. Par convention, l'orientation « axiale » se rapporte aux axes de référence **X, Y** ou **Z** ou à des directions parallèles à ces axes, et l'orientation « radiale » est dirigée orthogonalement aux axes de référence **X, Y** et **Z.** Un élément « radialement interne » est situé plus proche de l'axe de référence qu'un élément « radialement externe ».

Les termes « supérieur », « inférieur », « haut », « bas », et « fond » doivent être pris en considération en regardant le mécanisme de transmission dans une position/inclinaison similaire à la sienne lorsqu'il est monté sur un véhicule stationné à l'horizontale, cette position est appelée dans la suite de la description « position opérationnelle de référence ».

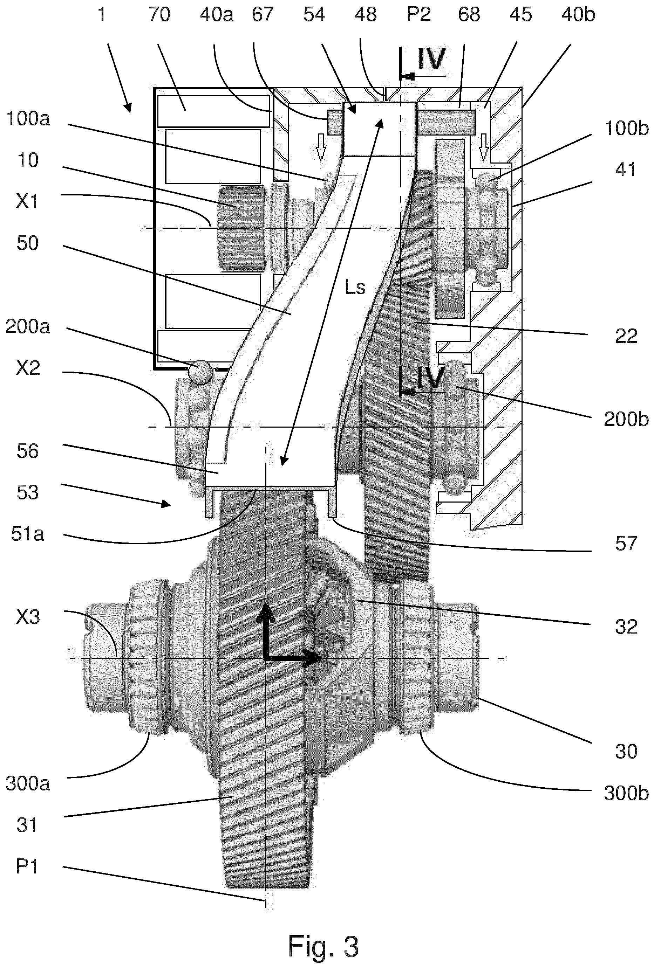

Sur la figure 3 est illustré un ensemble de propulsion électrique **100,** comportant un moteur électrique **70** et le mécanisme de transmission **10.**

Le moteur électrique **70** peut être, par exemple, un moteur électrique à induction, comportant un rotor et un stator, alimenté électriquement en courant alternatif triphasé par des batteries d'accumulateurs par le biais d'un convertisseur de courant (non représentés sur la figure 3).

Le moteur électrique **70** est maintenu sur un carter **40a, 40b** qui est un élément du mécanisme de transmission **10.** Le carter est généralement composé d'un carter principal **40a** supportant le moteur électrique **70** et d'un carter de fermeture **40b** venant en appui sur le carter principal **40a,** au niveau d'un plan de joint **48,** pour clore de façon étanche une cavité délimitée par le carter principal **40a** et le carter de fermeture **40b.** Le carter principal **40a** et le carter de fermeture **40b** peuvent être composé de plusieurs pièces rapportées ou d'une unique pièce, la ou les pièces étant moulées et/ou usinées.

Le moteur électrique **70** entraîne en rotation un arbre moteur qui pénètre dans le carter **40a, 40b.** La machine électrique **70** entraîne en rotation le premier arbre de transmission **10** qui constitue un arbre d'entrée du mécanisme de transmission **1.** Le dispositif de réduction de vitesse du mécanisme de transmission **1** comporte également un deuxième arbre de transmission **20,** et un troisième arbre de transmission **30** qui constitue un arbre de sortie du mécanisme de transmission **1.**

Le deuxième arbre de transmission **20** qui constitue un arbre intermédiaire du mécanisme de transmission **1** est parallèle au premier arbre de transmission **10** et au troisième arbre de transmission **30** du mécanisme de transmission **1.** En sortie du dispositif de réducteur de vitesse, le troisième arbre de transmission **30** est un différentiel qui est utilisé pour transmettre et distribuer un couple provenant de la moteur électrique **70,** vers deux arbres de roue d'un essieu d'un véhicule automobile.

Le troisième arbre de transmission **30** comporte une roue dentée de sortie de couple **31** mais aussi une liaison fixe en rotation avec un porte-satellites d'un différentiel **32,** ou constitue le porte-satellites du différentiel **32.** Le différentiel **32** peut être ouvert ou à glissements limités, en fonction des propriétés recherchées.

Le deuxième arbre de transmission **20** est solidaire en rotation d'une roue dentée intermédiaire **21** et d'un pignon intermédiaire **22** décalé axialement l'un par rapport à l'autre selon le deuxième axe de rotation **X2.** La roue dentée intermédiaire **21** forme un premier étage de réduction avec le pignon d'entrée de couple **11** du premier arbre de transmission **10,** et le pignon intermédiaire **22** forme un deuxième étage de réduction avec la roue dentée de sortie de couple **31** du troisième arbre de transmission **30.**

Les premier, deuxième et troisième axes de rotation **X1, X2, X3** sont parallèles entre eux.

Le premier arbre de transmission **10** est guidé en rotation par rapport au carter **40a, 40b** par un ou plusieurs paliers de guidage **100a, 100b.**

Le deuxième arbre de transmission **20** est guidé en rotation par rapport au carter **40a, 40b** par un ou plusieurs paliers de guidage **200a, 200b.**

Le troisième arbre de transmission **30** est guidé en rotation par rapport au carter **40a, 40b** par un ou plusieurs paliers de guidage **300a, 300b.**

Ces différents paliers de guidage en rotation permettent aux arbres de transmission d'être maintenu au sein du carter **40a, 40b** selon leur axe de rotation respectif.

Le carter principal **40a** en forme de creux comprend une embase **45** et une paroi périphérique **46** issue de matière avec l'embase, la paroi périphérique entourant en partie le dispositif de réduction de vitesse. La paroi périphérique **46** entoure en partie la roue dentée de sortie de couple **31** du troisième arbre de transmission **30.** Dans cet exemple, le dispositif de réduction de vitesse comprend un seul rapport de vitesse.

En service, le carter **40a, 40b** est rempli de lubrifiant, par exemple de l'huile de lubrification, jusqu'à une limite prescrite qui correspond à un plan de niveau d'huile au repos **14,** ce plan de niveau de lubrifiant au repos **14** étant horizontal lorsque le mécanisme de transmission est dans la position opérationnelle de référence. Chaque modèle de carter **40a, 40b** a une limite de niveau d'huile qui lui est propre en fonction des caractéristiques de ce dernier. Le cas échéant, cette limite de niveau d'huile et le plan de niveau de lubrifiant au repos **14** peuvent être matérialisés par un orifice **15** d'injection d'huile, au sens où il est prescrit, dans la position opérationnelle de référence, d'effectuer le remplissage du carter **40a, 40b** jusqu'à ce que le niveau d'huile atteigne l'orifice **15,** et pas au-delà. Le plan de niveau d'huile au repos est alors tangent au filetage de l'orifice **15** permettant d'y associer un bouchon **25.**

Pour la suite de l'exposé, on définit une position opérationnelle de référence du carter **40a, 40b** comme étant l'orientation tridimensionnelle dans laquelle le carter **40a, 40b** est installé dans un véhicule à l'horizontale. Dans cette position opérationnelle de référence, le troisième axe de rotation **X3** est situé au-dessus du plan de niveau de lubrifiant au repos **14.** Dans la suite de cette description, sauf mention contraire, l'invention sera décrite dans une position opérationnelle de référence.

Sur la figure 1 est illustré le mécanisme de transmission **1** dans un plan de coupe orthogonal au premier, deuxième et troisième axes de rotation **X1, X2, X3,** et en position opérationnelle de référence. Le mécanisme de transmission **1** est représenté en position statique, c'est-à-dire que la roue dentée de sortie de couple **31** du troisième arbre de transmission **30** n'est pas entrainée en rotation. Le mécanisme de transmission **1** comporte une partie relativement basse et une partie relativement haute.

Dans cette position opérationnelle de référence, le premier arbre transmission **10** et le troisième arbre transmission **30** se superposent au moins partiellement selon une direction verticale par rapport à la position opérationnelle de référence. C'est-à-dire qu'il existe un plan normal à l'axe de référence **Z** qui coupe simultanément le premier arbre transmission **10** et le troisième arbre transmission **30.**

Les paliers de guidage **300a, 300b** et une partie de la roue dentée de sortie de couple **31** barbotent dans l'huile au repos. Ainsi, une partie de la roue dentée de sortie de couple **31** se trouve sous le plan de niveau de lubrifiant au repos **14** lorsque le mécanisme de transmission **1** est dans la position opérationnelle de référence.

Dans l'exemple de la figure **1****,** le deuxième arbre de transmission **20** et le premier arbre de transmission **10** ne barbotent pas étant donné que le premier arbre transmission **10,** le deuxième arbre de transmission **20** et le troisième arbre transmission **30** se superposent au moins partiellement selon une direction verticale par rapport à la position opérationnelle de référence. Ainsi, il existe un plan normal à l'axe de référence **Z** qui coupe simultanément le premier arbre transmission **10,** le deuxième arbre de transmission **20** et le troisième arbre transmission **30.**

Sur les figures 1 à 4 est illustré un dispositif de guidage de lubrifiant **50** dont la fonction est d'amener l'huile de lubrification du bas vers le haut du carter et de la distribuer en différents points du dispositif de réduction de vitesse.

Afin d'améliorer la lubrification au sein du mécanisme de transmission **1,** le dispositif de guidage de lubrifiant **50** comprend une goulotte supérieure **51** dont la surface interne **51a** est orientée en direction de la roue dentée de sortie de couple **31.** L'orientation de la denture de la roue dentée de sortie de couple **31** ne permet pas de projeter l'huile de lubrification directement en direction du pignon d'entrée de couple **21.** La forme de la goulotte supérieure a pour effet de canaliser l'huile de lubrification en direction de la denture pignon d'entrée de couple **21.** Pour cela, la première extrémité **53** de la goulotte supérieure **51** recouvre la roue dentée de sortie de couple **31** et la deuxième extrémité **54** de la goulotte supérieure recouvre le pignon d'entrée de couple **21.**

La goulotte supérieure **51** présente un profil qui dévie axialement depuis le plan médian **P1** de la roue dentée de sortie de couple jusqu'au plan médian **P2** du pignon d'entrée de couple. Plus précisément, la goulotte supérieure **52** du dispositif de guidage de lubrifiant présente un profil incurvé, par exemple en forme de S, de sorte que la surface interne **51a** de la goulotte supérieure recouvre la roue dentée de sortie de couple et le pignon d'entrée de couple. Le flux de lubrifiant est ainsi orienté dans la zone désirée du carter.

La goulotte supérieure **51** pourrait avoir un autre type de profil mais dans tous les cas, la première extrémité **53** de la goulotte supérieure **51** recouvrirait la roue dentée de sortie de couple **31** et la deuxième extrémité **54** de la goulotte supérieure recouvrirait le pignon d'entrée de couple **21.**

La goulotte supérieure **51** est inclinée par rapport au plan de niveau de lubrifiant au repos **14** lorsque le mécanisme de transmission est dans une position opérationnelle de référence. L'angle d'inclinaison **α** de la surface interne **51a** à l'entrée de la goulotte supérieure **51** par rapport au plan de niveau de lubrifiant au repos **14** est généralement compris entre 30° et 70°, par exemple 60° comme illustré sur la figure 1. L'angle d'inclinaison **α** est la conséquence de l'architecture verticale du mécanisme de transmission **1** tel que décrit précédemment.

La goulotte supérieure **51** est de forme allongée avec deux extrémités, la première extrémité **53** étant agencée pour recevoir du lubrifiant projetée au sein du carter par la roue dentée de sortie de couple **31** et la deuxième extrémité **54** étant agencée pour évacuer le lubrifiant canalisé par la goulotte supérieure.

Comme illustré sur la figure 3, la goulotte supérieure **51** présente un fond **56** et deux rebords latéraux **57** pour former, en entrée du dispositif de guidage de lubrifiant **50,** une canalisation ayant en coupe transversale un profil ouvert, le fond **56** supportant la surface interne **51a** agencée pour recevoir le lubrifiant. Les deux rebords latéraux **57** recouvrent les flancs de la roue dentée de sortie de couple **31.**

Par exemple, les deux rebords latéraux **57** bordent la surface interne **51a** sur toute la longueur de la goulotte supérieure.

Le dispositif de guidage de lubrifiant **50** comprend également une goulotte inférieure **60** fixée sur la deuxième extrémité **54** de la goulotte supérieure **51** pour former, en sortie du dispositif de guidage de lubrifiant, une canalisation ayant en coupe transversale un profil fermé. La goulotte inférieure **60** présente une plaque de réception **61** de lubrifiant arrondie qui recouvre le pignon d'entrée de couple **21.** La courbure de la plaque de réception **61** de lubrifiant est sensiblement concentrique au pignon d'entrée de couple **21.** Un jeu de fonctionnement existe entre ces deux composants.

Selon un exemple, la goulotte inférieure **60** peut être rapportée sur la goulotte supérieure **51** et maintenue par collage, soudage, rivetage.

Selon un autre exemple, la goulotte inférieure **60** et la goulotte supérieure **51** peuvent être obtenues directement de matière par injection plastique.

La goulotte inférieure **60** est de forme allongée avec deux extrémités, la première extrémité **63** de réception de lubrifiant étant agencée pour recevoir du lubrifiant projetée au sein du carter par la roue dentée de sortie de couple **31** et la deuxième extrémité **64** d'évacuation de lubrifiant étant agencée pour évacuer le lubrifiant en direction du pignon de roue dentée **21.** La goulotte inférieure **60** comprend la plaque de réception **61** de lubrifiant et deux rebords qui fusionnent avec les deux rebords latéraux **57** de la goulotte supérieure. La plaque de réception **61** comprend une surface de réception **61a** qui fait face à la surface interne **51a** de la goulotte supérieure **51.**

Le fond **56** de la goulotte supérieure, les deux rebords latéraux **57** et la plaque de réception **61** de lubrifiant de la goulotte inférieure **60** forment un entonnoir qui canalise le lubrifiant en direction de la deuxième extrémité **64** d'évacuation de lubrifiant de la goulotte inférieure. Selon cette architecture, la surface de réception **61a** de la goulotte inférieure **60** et la surface interne **51a** de la goulotte supérieure **51** se font face et présentent des formes complémentaires.

La goulotte supérieure **51** présente une grande longueur de canalisation **Ls** et la goulotte inférieure **60** présente une petite longueur de canalisation **Li,** le ratio de recouvrement de la goulotte inférieure par rapport à la goulotte supérieure **Li/Ls** est compris entre 15 et 50 %. La valeur de la longueur de canalisation de la goulotte inférieur dépend de l'angle d'inclinaison **α** de la surface interne à l'entrée de la goulotte supérieure par rapport au plan de niveau de lubrifiant au repos lorsque le mécanisme de transmission est dans une position opérationnelle de référence. Plus l'angle d'inclinaison **α** est important, plus le ratio de recouvrement **Li/Ls** se rapproche de la valeur de 50%. La longueur **Li, Ls** peut être curviligne dans le cas où la goulotte est courbée. La longueur **Li, Ls** est mesurée entre les deux extrémités de la goulotte.

La deuxième extrémité **64** d'évacuation de lubrifiant de la goulotte inférieure comprend au moins une gouttière de sortie de lubrifiant **66** orientée perpendiculairement par rapport aux rebords latéraux **57** de la goulotte supérieure. La gouttière de sortie de lubrifiant **66** est contiguë à la plaque de réception **61** de lubrifiant de la goulotte inférieure.

Dans cet exemple de mise en œuvre de l'invention, la gouttière de sortie de lubrifiant **66** comprend un premier bec verseur **67** orienté en direction d'un premier palier de guidage **100a** du premier arbre de transmission **10** et un deuxième bec verseur **68** orienté en direction d'un deuxième palier de guidage **100b** du premier arbre de transmission.

Au repos, c'est-à-dire à l'arrêt, le dispositif de guidage de lubrifiant **50** situé au-dessus du plan de niveau d'huile au repos est vide, et le niveau d'huile correspond au plan de niveau de lubrifiant au repos **14.** Le niveau d'huile maximum varie faiblement lorsque le mécanisme de transmission **1** fonctionne à très faible vitesse. Cela s'explique par une rotation à faible vitesse de la roue dentée de sortie de couple **31,** celle-ci étant la plus grosse roue dentée du mécanisme de transmission **1** et donc la roue dentée la plus apte à projeter l'huile à travers le carter **40a, 40b.**

Plus la rotation des arbres de transmission est élevée, plus l'huile sera projetée à travers le carter **40a, 40b** par la rotation de la roue dentée de sortie de couple **31.** Lorsque l'huile est projetée dans le carter, elle est plaquée sur la surface interne **51a** de la goulotte supérieure qui recouvre la roue dentée de sortie de couple **31.**

L'huile captée par le dispositif de guidage de lubrifiant **50** est ensuite canalisée au sein de la goulotte supérieure **51,** depuis la première extrémité **53** jusqu'à la deuxième extrémité **54.** Sous l'effet de la gravité, l'huile captée par la surface interne **51a** retombe sur la surface de réception **61a** de la goulotte inférieure **60.** La forme en entonnoir du dispositif de guidage de lubrifiant **50** canalise le lubrifiant en direction de la deuxième extrémité **64** d'évacuation de lubrifiant de la goulotte inférieure. Enfin, l'huile emprunte la gouttière de sortie de lubrifiant **66** orientée perpendiculairement par rapport aux rebords latéraux **57** de la goulotte supérieure. Une partie de l'huile se déverse au sein du premier bec verseur **67** orienté en direction d'un premier palier de guidage **100a** du premier arbre de transmission **10** et une partie de l'huile se déverse au sein du deuxième bec verseur **68** orienté en direction d'un deuxième palier de guidage **100b** du premier arbre de transmission.

Chacun des becs verseurs **67,** 68 dirige l'huile dans une rainure **45** formée dans le carter **40a, 40b** afin d'être acheminée dans les paliers de guidage **100a, 100b** comme cela est illustré par des flèches sur la figure 3. La rainure **45** débouche dans la partie supérieure d'un logement cylindrique **41** de réception du deuxième palier de guidage **100b.** Un flux d'huile de lubrification est donc acheminé depuis le bas du carter principal **40a** pour être dirigé ensuite vers le deuxième palier de guidage **100b** situé en haut du carter de fermeture **40b.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention. Par exemple, l'invention qui a été décrite ici dans le cadre d'un réducteur de vitesse à un seul rapport peut aussi être appliquée sur un réducteur de vitesse à deux rapports de vitesse voir plus de deux rapports. L'invention peut également être appliquée aux boites de vitesses. Le mécanisme de transmission peut comprendre un quatrième arbre de transmission intercalé cinématiquement entre le premier arbre de transmission et le troisième arbre de transmission.

Par exemple, le dispositif de guidage de lubrifiant pourrait être partiellement issu de matière dans le carter principal ou dans le carter de fermeture. C'est-à-dire qu'une partie de la goulotte supérieure pourrait être réalisée de matière avec l'un des carters. Dans ce cas, un des rebords latéraux et/ou la face interne de la goulotte supérieure seraient formée en partie par le carter et en partie par un composant rapporté.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Mécanisme de transmission (1) à lubrification interne, comportant un carter (40a, 40b), le carter (40a, 40b) définissant un plan de niveau de lubrifiant au repos (14) lorsque le mécanisme de transmission (1) est dans une position opérationnelle de référence, le mécanisme de transmission (1) comportant en outre, logés dans le carter (40a, 40b), un premier arbre transmission (10) guidé en rotation autour d'un premier axe de rotation (X1) et solidaire en rotation d'au moins un pignon d'entrée de couple (11), un deuxième arbre de transmission guidé en rotation autour d'un deuxième axe de rotation (X2) et un troisième arbre de transmission (18) guidé en rotation autour d'un troisième axe de rotation (X3) et solidaire en rotation d'au moins une roue dentée de sortie de couple (31), le premier arbre transmission (10) et le troisième arbre transmission (30) se superposant au moins partiellement selon une direction verticale par rapport à la position opérationnelle de référence, une partie de la roue dentée de sortie de couple (31) se trouvant sous le plan de niveau de lubrifiant au repos (14) lorsque le mécanisme de transmission (1) est dans la position opérationnelle de référence, le mécanisme de transmission (1) comportant un dispositif de guidage de lubrifiant (50) logé dans le carter (40a, 40b) et disposé entre le carter et la roue dentée de sortie de couple (31),
**caractérisé en ce que** le dispositif de guidage de lubrifiant (50) comprend une goulotte supérieure (51) dont la surface interne (51a) est orientée en direction de la roue dentée de sortie de couple (31), la première extrémité (53) de la goulotte supérieure recouvre la roue dentée de sortie de couple (31) et la deuxième extrémité (54) de la goulotte supérieure recouvre le pignon d'entrée de couple (11).

2. Mécanisme de transmission (1) selon la revendication 1, dans lequel le deuxième arbre de transmission (20) est solidaire en rotation d'une roue dentée intermédiaire (21) et d'un pignon intermédiaire (22) décalé axialement l'un par rapport à l'autre selon le deuxième axe de rotation (X2), le pignon d'entrée de couple (11) du premier arbre de transmission (10) engrène avec la roue dentée intermédiaire (21) et la roue dentée de sortie de couple (31) du troisième arbre de transmission (30) engrène avec le pignon intermédiaire (22), la goulotte supérieure du dispositif de guidage de lubrifiant (50) présente un profil qui dévie axialement depuis le plan médian de la roue dentée de sortie de couple (31) jusqu'au plan médian du pignon d'entrée de couple (11).

3. Mécanisme de transmission (1) selon la revendication précédente, dans lequel la goulotte supérieure (51) du dispositif de guidage de lubrifiant (50) présente un profil incurvé, par exemple en forme de S, de sorte que la surface interne (51a) de la goulotte supérieure recouvre la roue dentée de sortie de couple (31) et le pignon d'entrée de couple (11).

4. Mécanisme de transmission (1) selon l'une des revendications précédentes, dans lequel la goulotte supérieure (51) présente un fond (55) et deux rebords latéraux (57) pour former, en entrée du dispositif de guidage de lubrifiant (50), une canalisation ayant en coupe transversale un profil ouvert, le fond supportant la surface interne agencée pour recevoir le lubrifiant.

5. Mécanisme de transmission (1) selon la revendication précédente, dans lequel les deux rebords latéraux (57) recouvrent les flancs de la roue dentée de sortie de couple (31).

6. Mécanisme de transmission (1) selon l'une des revendications précédentes, dans lequel le dispositif de guidage de lubrifiant (50) comprend une goulotte inférieure (60) fixée sur la deuxième extrémité (54) de la goulotte supérieure pour former, en sortie du dispositif de guidage de lubrifiant (50), une canalisation ayant en coupe transversale un profil fermé.

7. Mécanisme de transmission (1) selon la revendication précédente, dans lequel la goulotte inférieure (60) présente une plaque de réception (61) de lubrifiant arrondie qui recouvre le pignon d'entrée de couple (11).

8. Mécanisme de transmission (1) selon la revendication précédente, dans lequel la goulotte inférieure (60) comprend la plaque de réception (61) de lubrifiant et deux rebords qui fusionnent avec les deux rebords latéraux (57) de la goulotte supérieure, la plaque de réception (61) comprend une surface de réception (61a) qui fait face à la surface interne (51a) de la goulotte supérieure (51).

9. Mécanisme de transmission (1) selon la revendication précédente, dans lequel la plaque de réception (61) de lubrifiant de la goulotte inférieure comprend un becquet de réception situé sur une première extrémité (63) de réception de lubrifiant.

10. Mécanisme de transmission (1) selon l'une des revendications 6 à 9, dans lequel la goulotte supérieure (51) présente une grande longueur de canalisation (Ls) et la goulotte inférieure (60) présente une petite longueur de canalisation (Li), le ratio de recouvrement de la goulotte inférieure par rapport à la goulotte supérieure Li/Ls est compris entre 15 et 50 %.

11. Mécanisme de transmission (1) selon l'une des revendications 6 à 10, dans lequel un fond (55) de la goulotte supérieure, deux rebords latéraux (57) de la goulotte supérieure et la plaque de réception (61) de lubrifiant de la goulotte inférieure (60) forment un entonnoir qui canalise le lubrifiant en direction d'une deuxième extrémité (64) d'évacuation de lubrifiant de la goulotte inférieure.

12. Mécanisme de transmission (1) selon la revendication précédente, dans lequel la deuxième extrémité (64) de la goulotte inférieure (60) comprend au moins une gouttière de sortie de lubrifiant (66) orientée perpendiculairement par rapport aux rebords latéraux (57) de la goulotte supérieure (51).

13. Mécanisme de transmission (1) selon la revendication précédente, dans lequel la gouttière de sortie de lubrifiant (66) est contiguë à la plaque de réception (61) de lubrifiant de la goulotte inférieure.

14. Mécanisme de transmission (1) selon la revendication 12 ou 13, dans lequel la gouttière de sortie de lubrifiant (66) comprend un premier bec verseur (67) orienté en direction d'un premier palier de guidage (100a) du premier arbre de transmission (10) et un deuxième bec verseur (68) orienté en direction d'un deuxième palier de guidage (100b) du premier arbre de transmission.

15. Mécanisme de transmission (1) l'une des revendications précédentes, dans lequel le carter (40a, 40b) est composé d'un carter principal (40a) et d'un carter de fermeture (40b) reliés ensemble par l'intermédiaire d'un plan de joint (48) pour former une cavité étanche, le dispositif de guidage de lubrifiant (50) étant disposé entre le carter principal et le carter de fermeture.
